# FASCICULE DE BREVET EUROPEEN

(11) **EP 0 533 572 B1**
(45) Date de publication et mention de la délivrance du brevet: **09.11.1994**
(21) Numéro de dépôt: 92402553.9
(22) Date de dépôt: 17.09.1992
(51) Int. Cl.: B23P 19/04, B62D 65/00, B60R 13/06

(54) **Dispositif pour la mise en place d'un profilé à section en U sur un rebord d'un encadrement d'une carrosserie d'automobile**
Vorrichtung zum Anbringen eines Profils mit U-förmigem Querschnitt auf den Rand eines Rahmenteils einer Autokarosserie
Device for placing a profile with U cross section on an edge of a frame of an automotive body

(30) Priorité: 18.09.1991 FR 9111494
(43) Date de publication de la demande: 24.03.1993
(73) Titulaire: ETABLISSEMENTS MESNEL SOCIETE ANONYME DITE :, F-78420 Carrières-Sur-Seine (FR)
(72) Inventeur: Mesnel, François, F-92200 Neuilly-Sur-Seine (FR); Mesnel, Gérard, F-78420 Carrières-Sur-Seine (FR)
(74) Mandataire: Jolly, Jean-Pierre

(56) Documents cités:
- EP-A- 0 253 599
- EP-A- 0 451 023
- GB-A- 2 238 339

## Description

La présente invention concerne un dispositif pour la mise en place d'un profilé à section en U sur un rebord d'un encadrement d'une carrosserie d'automobile ou similaire, Elle concerne plus particulièrement la mise en place, sur des encadrements de portes d'automobiles ou sur des bords d'ouvertures de coffres d'automobiles, de joints d'étanchéité comprenant un tel profilé formant pince, en matière polymère armée, et un élément d'étanchéité attenant à ce profilé,

On sait que de tels joints comprennent habituellement un profilé à section en U, comprenant une armature métallique, gainée d'une matière souple telle que du caoutchouc ou une matière plastique, ce profilé étant destiné à être fixé par pincement sur un bord saillant ou une partie saillante d'une carrosserie d'automobile, Ce profilé est associé à un élément d'étanchéité souple, tubulaire par exemple, destiné à être comprimé entre deux parties de la carrosserie, une portière et son encadrement par exemple,

Dans sa demande de brevet européen EP-A-0451023 du 27 Mars 1991 (état de la technique tel que défini à l'article 54(3) CBE), la Demanderesse a proposé, pour la miseen place sur un rebord saillant d'une carrosserie d'automobile d'un tel profilé comprenant une armature métallique sensiblement non extensible, gainée d'une matière résiliente, un procédé selon lequel on utilise une longueur de profilé sensiblement égale à celle de l'encadrement de carrosserie à équiper, on fixe initialement en position en un emplacement prédéterminé du rebord de l'encadrement de carrosserie, éventuellement repéré, une partie prédéterminée et éventuellement repérée du profilé, et, à l'aide d'un maillet vibrant à tête souple, animé d'un mouvement alternatif de percussion, on applique ensuite en continu le profilé contre le rebord de l'encadrement de carrosserie, à partir dudit emplacement prédéterminé, jusqu'à une première extrémité du profilé, puis, toujours à partir dudit emplacement prédéterminé, jusqu'à l'autre extrémité du profilé,

Dans cette même demande de brevet européen, la Demanderesse a proposé un dispositif pour la mise en oeuvre de ce procédé, ce dispositif comprenant un maillet à tête souple et des moyens tels qu'un porte-outils vibrant pour imprimer à la tête de ce maillet un mouvement alternatif de percussion.

Dans une forme préférée de réalisation de ce dispositif, le porte-outil vibrant et le maillet à tête souple solidaire de la partie mobile de celui-ci sont portés par un bras d'un robot et la mise en oeuvre du procédé est entièrement automatisée à l'aide de ce robot, programmé de façon conventionnelle.

Le maillet à tête souple, ou la structure portant celui-ci, comporte au moins un élément de guidage du profilé, apte à amener le profilé en alignement avec la partie de la tête souple du maillet vibrant qui agit sur le profilé et le rebord saillant sur lequel doit être monté le profilé.

Dans une forme de mise en oeuvre décrite dans la demande de brevet européen mentionnée ci-dessus, l'élément de guidage du profilé est constitué par une structure en U, entre les branches desquelles peut être engagé le profilé et qui peut être fermé au niveau de l'extrémité libre des branches du U par un organe amovible de fermeture tel qu'une goupille, actionné par un moyen approprié.

La présente invention vise à proposer une variante de réalisation d'un dispositif de ce type, dont l'élément de guidage du profilé est plus souple et plus facile à actionner que celui du dispositif décrit dans cette demande antérieure.

L'invention a également pour but de proposer une variante du dispositif selon la demande de brevet européen mentionnée ci-dessus, qui soit plus particulièrement adaptée à la mise en place d'un profilé comportant une lèvre attenante à la branche du profilé à section en U qui n'est pas solidaire de l'élément d'étanchéité.

L'invention a par conséquent pour objet un dispositif pour la mise en place, sur un rebord saillant d'un encadrement de carrosserie d'automobile, d'un profilé à section en U comportant une armature métallique gainée d'une matière résiliente, ce dispositif comprenant un maillet à tête souple, des moyens pour imprimer à la tête de ce maillet un mouvement alternatif de percussion et au moins un système de guidage du profilé apte à amener celui-ci devant la partie de la tête souple du maillet destinée à agir sur lui, ce système de guidage comprenant une structure à profil en U entre les branches de laquelle peut être engagé le profilé et qui peut être fermée par un organe mobile apte à réunir sensiblement les branches de la structure pour y maintenir le profilé, ce dispositif étant caractérisé en ce que l'organe mobile de fermeture comprend un levier monté pivotant, sous la sollicitation d'un moyen de commande, dans un plan sensiblement parallèle à celui des branches de la structure en U, autour d'un axe en position fixe par rapport au corps du maillet, ce levier étant susceptible d'occuper une première position, dans laquelle le profilé est emprisonné par ce levier entre les branches de la structure en U, et une seconde position, dans laquelle le levier laisse le profilé libre d'être engagé entre ou dégagé d'entre les branches de la structure en U.

Le moyen de commande du levier pourra être un simple vérin attaquant une extrémité de celui-ci et l'axe de pivotement sera solidaire de l'ossature du dispositif et parallèle à l'axe de vibration de la tête de percussion du maillet vibrant.

Dans une forme de réalisation préférée de mise en oeuvre de l'invention, afin de mieux assurer le guidage du profilé, chaque système de guidage comprendra deux structures à profil en U disposées en parallèle et un unique levier disposé entre les deux structures et apte à pivoter dans un plan parallèle à celui de ces structures, celles-ci étant suffisamment rapprochées pour que le levier puisse fermer simultanément les deux structures en réunissant sensiblement les deux branches de chacun d'entre elles.

Deux systèmes de guidage de ce type équiperont de préférence le dispositif selon l'invention, ces systèmes étant disposés dans le prolongement l'un de l'autre et décalés d'un angle de 180° par rapport à l'axe de vibration de la tête de percussion, afin de pouvoir utiliser le système de guidage le mieux adapté aux positions relatives du dispositif de mise en place du profilé et de la carrosserie à équiper de ce profilé.

Avantageusement, l'ossature du dispositif comportera un crochet formant embauchoir, apte, sous la sollicitation d'un moyen de commande approprié, à venir se placer sous une lèvre cosmétique équipant éventuellement le profilé, après mise en place de celui-ci sur la carrosserie, et à se déplacer longitudinalement sous cette lèvre, de manière à la redresser, Le moyen de commande de ce crochet pourra être programmé et le robot entraînant le dispositif conforme à l'invention pourra ainsi procéder successivement à la mise en place du profilé sur la carrosserie et à la mise en position correcte de la lèvre cosmétique, Cette dernière opération est habituellement effectuée manuellement par un opérateur, mais elle est très fastidieuse et les ouvriers souhaitent depuis longtemps pouvoir y procéder mécaniquement, Cette possibilité, offerte par le dispositif conforme à l'invention, constitue donc un avantage appréciable de celui-ci.

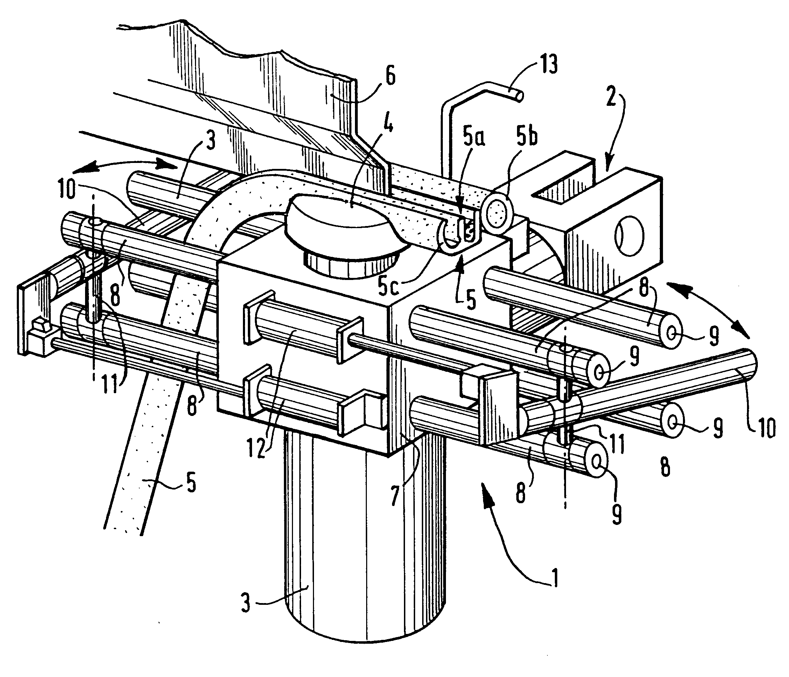

Une forme de mise en oeuvre de l'invention va maintenant être décrite ci-après, à titre d'exemple non limitatif, en référence à la figure unique, annexée à la présente, qui est une vue schématique en perspective du dispositif.

Sur ce dessin, l'ensemble du dispositif est désigné par la référence 1. Il peut être fixé à l'aide d'une fourche 2 et d'un écrou (non représenté) sur le bras d'un robot.

Comme décrit dans la demande de brevet européen mentionnée ci-dessus, le dispositif comprend un moteur 3, par exemple à air comprimé, apte à imprimer des vibrations à la tête en caoutchouc 4 d'un maillet pour appliquer et mettre en place un profilé 5 sur le rebord 6 d'une tôle d'une carrosserie automobile. Le profilé 5 comprend, de façon connue :
- une partie à section en U formant pince 5a, à armature métallique gainée d'un élastomère, apte à coiffer le rebord 6 ;
- un élément tubulaire d'étanchéité 5b attenant à une des branches du U de la pince 5a ;
- une lèvre 5c, attenante à l'autre branche du U de la pince 5a, cette lèvre dite "cosmétique", ayant une fonction décorative.

Pour guider le profilé 5, conformément à la présente invention, l'ossature 7 entourant la tête de maillet 4 porte deux ensembles de guidage, disposés dans le prolongement l'un de l'autre et décalés de 180° par rapport à l'axe de vibration de la tête 4. Chacun de ces ensembles de guidage comprend deux structures en U disposées dans des plans parallèles, perpendiculaires à l'axe de vibration de la tête 4, chaque structure comprenant deux rouleaux 8 parallèles, montés fous autour d'axes 9 solidaires de l'ossature 7. Entre chacune des deux paires de structures en U est disposé un levier 10 monté pivotant autour d'un axe 11, perpendiculaire aux rouleaux 8 et solidaire des axes 9 de deux de ces rouleaux. Sous la sollicitation d'un vérin 12 porté par l'ossature 7, le levier 10 pivote donc dans un plan parallèle à ceux des structures en U définies par les rouleaux 8 et il est suffisamment proche des paires de rouleaux pour fermer simultanément les deux structures contiguës, en se plaçant au voisinage immédiat des extrémités libres des rouleaux 8, pour emprisonner entre eux le profilé 5.

L'ossature 7 porte par ailleurs un crochet 13 formant embauchoir, qui, après mise en place du profilé 5 sur le rebord de tôle 6, est amené sous la lèvre 5c par un mécanisme non représenté et est déplacé longitudinalement entre cette lèvre 5 et le joint d'étanchéité 5b, de manière à redresser cette lèvre, déformée lors de la mise en place du profilé, sans qu'un opérateur ait à intervenir manuellement.

L'invention apporte donc un perfectionnement avantageux au système de mise en place automatisé d'un profilé sur une carrosserie d'automobile, qui fait l'objet de la demande de brevet européen EP-A-0451023 précitée.

## Revendications

1. Dispositif pour la mise en place, sur un rebord saillant (6) d'un encadrement de carrosserie d'automobile, d'un profilé (5a) à section en U comportant une armature métallique gainée d'une matière résiliente, ce dispositif comprenant un maillet à tête souple (4), des moyens (3) pour imprimer à la tête de ce maillet un mouvement alternatif de percussion et au moins un système de guidage du profilé (5) apte à amener celui-ci devant la partie de la tête souple (4) du maillet destinée à agir sur lui, ce système de guidage comprenant une structure à profil en U, entre les branches (8) de laquelle peut être engagé le profilé (5) et qui peut être fermée par un organe mobile apte à réunir sensiblement les branches (8) de la structure pour y maintenir le profilé, l'organe mobile de fermeture comprend un levier (10) monté pivotant, sous la sollicitation d'un moyen de commande, dans un plan sensiblement parallèle à celui des branches de la structure en U, autour d'un axe (11) en position fixe par rapport au corps (7) du maillet, ce levier (10) étant susceptible d'occuper une première position, dans laquelle le profilé est emprisonné par ce levier entre les branches (8) de la structure en U, et une seconde position, dans laquelle le levier (10) laisse le profilé libre d'être engagé entre ou dégagé d'entre les branches (8) de la structure en U.

2. Dispositif selon la revendication 1, caractérisé en ce que le système de guidage du profilé (5) comprend deux structures à profil en U disposées en parallèle et un unique levier (10) disposé entre les deux structures et apte à pivoter entre elles dans un plan parallèle, les deux structures étant suffisamment rapprochées pour que le levier (10) puisse les fermer simultanément en réunissant sensiblement les deux branches (8) de chacune d'entre elles.

3. Dispositif selon la revendication 2, caractérisé en ce que l'axe de pivotement du levier (10) est perpendiculaire à deux branches (8) contiguës des deux structures parallèles et solidaire de ces branches.

4. Dispositif selon l'une des revendications 1 à 3, caractérisé en ce que le moyen de commande du levier (10) comprend un vérin (12) porté par l'ossature (7) du dispositif.

5. Dispositif selon l'une des revendications 1 à 4, caractérisé en ce qu'il comprend deux paires de structures en U disposées dans le prolongement les unes des autres et décalées de 180° par rapport à l'axe de vibration de la tête (4) de percussion.

6. Dispositif selon l'une des revendications 1 à 5, caractérisé en ce qu'il comporte un crochet (13) formant embauchoir, apte, sous la sollicitation d'un moyen de commande, à venir se placer sous une lèvre (5c) attenante éventuellement au profilé 5a à section en U et à se déplacer longitudinalement entre ce profilé (5a) et cette lèvre (5c) pour redresser cette dernière.

## Claims

1. A device for placing a profile member (5a) of U-shaped section comprising a metal fastening encased in a resilient material on a projecting edge (6) of a framework of a car body, this device comprising a flexible headed mallet (4), means (3) for imparting a varying striking movement to the mallet head and at least one system for guiding the profile member (5) which is capable of bringing it in front of the part of the flexible head (4) of the mallet intended to act upon it, this guide system comprising a structure of U-shaped profile between the limbs (8) of which the profile member (5) is able to engage and which can be closed by a movable member capable of substantially joining the limbs (8) of the structure in order to hold the profile member there, the movable closure member comprising a lever (10), which, subject to the action of a control means, is mounted to pivot in a plane substantially parallel to that of the limbs of the U-shaped structure about an axis (11) which is fixed in relation to the body (7) of the mallet, this lever (10) being capable of occupying a first position in which the profile member is imprisoned by the lever between the limbs (8) of the U-shaped structure, and a second position in which the lever (10) allows the free profile member to be engaged between, or disengaged from, the limbs (8) of the U-shaped structure.

2. A device according to Claim 1, characterised in that the guide system of the profile member (5) comprises two structures of U-shaped profile which are disposed in parallel relationship and one single lever (10) which is disposed between the two structures and which is capable of pivoting between them in a parallel plane, the two structures being brought together sufficiently to enable the lever (10) to be able to simultaneously close them, by apparently joining the two limbs (8) of each of them.

3. A device according to Claim 2, characterised in that the axis of pivotal moment of the lever (10) is perpendicular to two contiguous limbs (8) of two parallel structures and is integral with those limbs.

4. A device according to one of Claims 1 to 3, characterised in that the control means for the lever (10) comprises a jack (12) which is carried by the frame (7) of the device.

5. A device according to one of Claims 1 to 4, characterised in that it comprises two pairs of U-shaped structures disposed in the extension of each other and offset by 180° from the axis of vibrational movement of the striking head (4).

6. A device according to one of Claims 1 to 5, characterised in that it comprises a hook (13) which forms an entrainment member and which is capable, when subjected to the action of a control means, of coming into a position under a lip (5c) which may be joined to the profile member 5a of U-shaped section and of moving longitudinally between that profile member (5a) and the lip (5c) in order to straighten out this latter.

## Patentansprüche

1. Vorrichtung für die Montage eines im Schnitt U-förmigen Profilelements (5a) auf einem vorspringenden Rand (6) eines Automobil-Karosserierahmens, welches Profilelement eine Metallarmatur aufweist, die von elastischem Werkstoff umhüllt ist, wobei die Vorrichtung einen Holzhammer oder Stößel mit weichem Kopf (4), Mittel, um dem Kopf des Stößels eine wechselnde Stoßbewegung zu verleihen und mindestens ein Führungssystem des Profilelements (5) aufweist, das dazu geeignet ist, das Profilelement vor den Bereich des weichen Kopfes (4) des Stößels herzuleiten, der dazu bestimmt ist, auf es zu wirken, wobei das Führungssystem eine U-förmige Profilstruktur aufweist, zwischen deren Seitenschenkel (8) das Profilelement (5) anliegt und die durch ein bewegliches Organ geschlossen werden können, das dazu geeignet ist, die Seitenschenkel (8) der Struktur im wesentlichen zu vereinigen, um das Profilelement dort zu halten, wobei das bewegliche Schließorgan einen Hebel (10) aufweist, der unter Beanspruchung durch ein Steuermittel schwenkbeweglich in einer Ebene gelagert ist, die im wesentlichen parallel zu derjenigen der Seitenschenkel der U-förmigen Struktur ist, und zwar schwenkbeweglich um eine Achse (11), die in Position gehalten gegenüber dem Körper (7) des Stößels ist, wobei der Hebel (10) in eine erste Position, in welcher das Profilelement durch den Hebel zwischen den Seitenschenkeln (8) der U-förmigen Struktur gefangen ist, und eine zweite Position bringbar, in welcher der Hebel (10) das Profil von der Anlage freigibt oder außer Eingriff zwischen den Seitenschenkeln (8) der U-förmigen Struktur bringt.

2. Vorrichtung nach Anspruch 1, dadurch gekennzeichnet, daß das Führungssystem des Profilelements (5) zwei Strukturen mit U-förmigem Profil, die parallel angeordnet sind, und einen einzigen Hebel (10) aufweist, der zwischen den Strukturen angeordnet ist und dafür ausgelegt ist, zwischen ihnen in einer parallelen Ebene verschwenkt zu werden, wobei die zwei Strukturen ausreichend aneinander angenähert sind, daß der Hebel (10) bei der Zusammenführung der beiden Seitenschenkel (8) jeder Struktur diese gleichzeitig schließen kann.

3. Vorrichtung nach Anspruch 2, dadurch gekennzeichnet, daß die Schwenkachse des Hebels (10) senkrecht zu den beiden benachbarten Seitenschenkeln (8) der beiden parallelen Strukturen und fest mit diesen verbunden ist.

4. Vorrichtung nach einem der Ansprüche 1 bis 3, dadurch gekennzeichnet, daß das Mittel zur Steuerung des Hebels (10) einen Kraftzylinder (12) aufweist, der durch den Rahmen (7) der Vorrichtung gelagert ist.

5. Vorrichtung nach einem der Ansprüche 1 bis 4, dadurch gekennzeichnet, daß sie zwei Paare von U-förmigen Strukturen aufweist, die in Verlängerung zueinander und um 180° gegenüber das Schwingachse des Schlagkopfes (4) verlagert ist.

6. Vorrichtung nach einem der Ansprüche 1 bis 5, dadurch gekennzeichnet, daß sie eine Klammer (13) trägt, die eine Halteleiste bildet, die unter Beanspruchung durch ein Steuermittel dafür geeignet ist, unter eine Lippe (5c) zu gelangen, die ggf. an dem Profilelement (5a) mit U-förmigem Querschnitt angrenzt, und dafür geeignet ist, sich längs des Profilelements (5a) und der Lippe (5c) zu verschieben, um letztere zurückzurichten.
